# EUROPEAN PATENT APPLICATION

(11) **EP 0 705 013 A1**
(43) Date of publication of application: **03.04.1996**
(21) Application number: 95104326.4
(22) Date of filing: 23.03.1995
(51) Int. Cl.: H04L 29/06

(54) **Data communication system with adaptive concatenation**

(30) Priority: 21.09.1994 US 309580
(71) Applicant: RACOTEK, INC., Minneapolis, Minnesota 55439 (US)
(72) Inventor: Shpantzer, Isaac, Edina, Minnesota 55439 (US); Dunn, J. Eric, St. Paul, Minnesota 55103 (US); Kelman, Vladimir Z., Egan, Minnesota 55121 (US)
(74) Representative: Popp, Eugen, Dr.

(57) **Abstract**

A data transmission system is provided for transmitting digital data messages to a plurality of destinations. When a digital data message is received, its destination is determined. If the destination of the received message is the same as the destination of a previously received message, the message is concatenated with the previously received message into a destination packet. If the destination of the received message is not the same as the destination of a previously received message, a new destination packet is provided. The destination packets are queued and are transmitted periodically via radio.

## Description

The present invention concerns a novel data communication system for efficiently transmitting a plurality of data messages to a plurality of destinations.

### BACKGROUND OF THE INVENTION

In digital data communication via radio there is a need for decreasing the transmission time. Typically when the communication software operates to send a message, the message is placed in an outbound queue. While the computer can feed a lot of messages rapidly to the software, the radio/modem is generally unable to transmit as quickly as the messages are fed. Thus a queuing protocol is required so that the stream of messages has the minimum latency and the maximum efficiency for delivery.

The infrastructure air time includes an overhead time plus a byte per second transmission rate time. For example, in a typical system the infrastructure air time for each data packet may equal one second (overhead) plus the number of bytes in the packet divided by 606. In addition, as data messages are sent out via the outbound queue, messages are being sent in to the inbound queue. A time of, for example one second, may be required between each outbound packet so that inbound messages can be received.

We have discovered a novel system for reducing transmission air time by reducing the number of data packets. It is, therefore, an object of the present invention to provide a novel system for reducing the transmission time for a plurality of data messages destined for a plurality of destinations.

Another reason for decreasing the number of packets is that statistically, the messages go through far better if there are less packets. Statistically, as the number of packets increase, there is an increase in the number of collisions between transmissions. By decreasing the number of packets, the system increases capacity, decreases wasted air time, reduces collisions and reduces the load on the system.

### SUMMARY OF THE INVENTION

In accordance with the present invention, a data transmission system is provided for transmitting a plurality of data messages to a plurality of destinations. The system comprises the steps of receiving a plurality of messages destined for a plurality of destinations. When a message is received, its destination is determined. The messages destined for the same destination are concatenated into respective destination packets. The respective destination packets are queued and the queued packets are transmitted periodically.

In the illustrative embodiment, the system includes the step of forming an additional destination packet if the length of messages for concatenation into a destination packet exceeds a predetermined length. If desired, the concatenated messages may be compressed in a packet.

In the illustrative embodiment, the messages comprise digital data and the compressing step comprises the step of reducing the number of bytes by coding duplicative data.

In the illustrative embodiment, a computer program is operative for aiding in the transmission of a plurality of digital data messages to a plurality of destinations. In this embodiment, a first digital data message is received destined for a first destination. The first message is stored for transmittal in a first destination packet. A second digital data message is received and a determination is made whether there is a stored message. If there is a stored a message, the system determines if the second message is destined for the first destination. If the second message is destined for the first destination, then the second message and the first message are concatenated into the first destination packet and the first destination packet is stored. If the second message is not destined for the first destination, then the second message is stored for transmission in a second destination packet.

A third message is received. A determination is made whether the third message is destined for the first destination or the second destination. If the third message is destined for the first destination or the second destination, then the third message is concatenated with the respective destination packet for which the third message is destined. If the third message is not destined for the first destination or the second destination, then the third message is stored for transmittal in a third destination packet.

If the length of the messages for storage in a destination packet exceeds a predetermined length, an additional destination packet is formed. Concatenated messages in a packet may be compressed to save further transmission time. Such compression comprises reducing the number of bytes by coding duplicative data.

A more detailed explanation of the invention is provided in the following description and claims, and is illustrated in the accompanying drawings.

### BRIEF DESCRIPTION OF THE DRAWINGS

Fig. 1 is a block diagram of a data communication system in accordance with the present invention.

Fig. 2 is a diagram of a queuing system in accordance with the present invention.

Fig. 3 is a diagram of a message arrival example.

Figs. 4A through 4G are diagrams of the processing of the messages of Fig. 3 on the flow chart of Fig. 5 with the resulting transmit queue.

Fig. 5 is a flow chart of a system according to the present invention.

Fig. 6 is a diagram of a transmit queue according to the principles of the present invention.

### DETAILED DESCRIPTION OF THE ILLUSTRATIVE EMBODIMENT

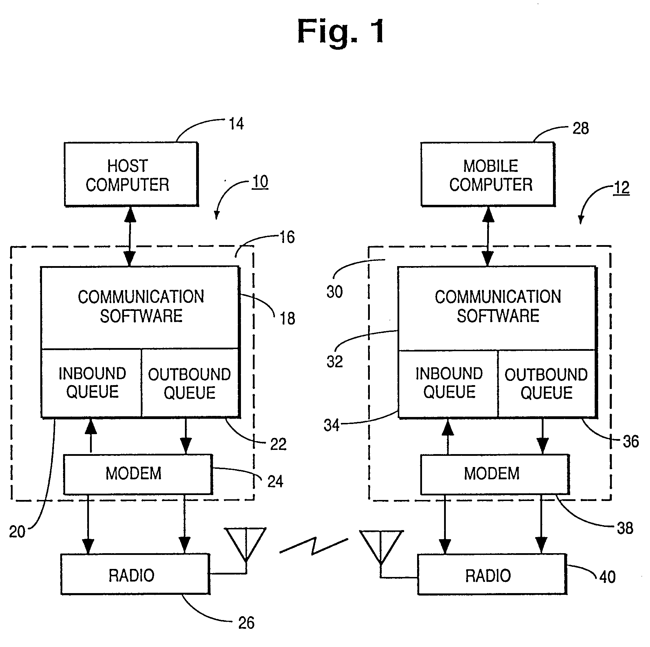

Referring to Fig. 1, a radio data communication system is shown including a static node 10 and a mobile node 12. Static node 10 includes a host computer 14 coupled to a gateway computer 16. The gateway computer 16 includes communication software 18, an inbound queue 20 which is in RAM storage, and an outbound queue 22 which is also in RAM storage. A modem 24 communicates with inbound queue 20 and outbound queue 22 and with a radio 26.

In the mobile node 12 there is a mobile computer 28 communicating with a mobile communication controller (MCC) 30. On the MCC there is communication software 32, an inbound queue 34 which is in RAM storage, and an outbound queue 36 which is also in RAM storage. A modem 38 communicates with inbound queue 34 and outbound queue 36 and a radio 40 is coupled to modem 38.

In a typical data transmission system via radio, a relatively predictable amount of time is required for the transmission of digital data packets. As an example, the infrastructure air time may be equal to one second (overhead) plus the number of bytes divided by 606. In other words, 606 is the number of bytes per second that can be transmitted on the particular infrastructure. Thus each time a packet is transmitted, there is a one second overhead delay plus the number of bytes divided by 606 seconds per packet delay.

In addition, as messages are being sent out from outbound queue 22, mobiles are attempting to send messages in to inbound queue 20. In order for messages to get in to inbound queue 20, typically a space is provided between the sending of packets. As an example, a one second time period may be provided between outbound transmissions of each packet.

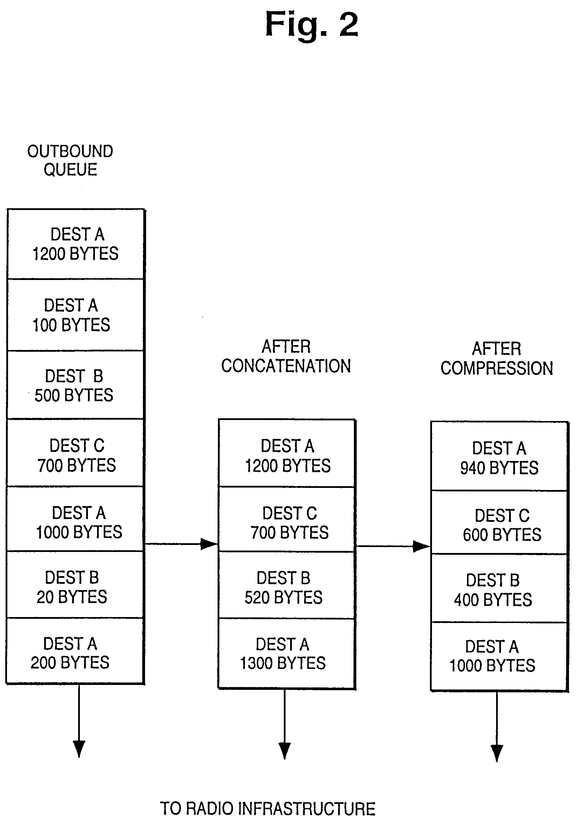

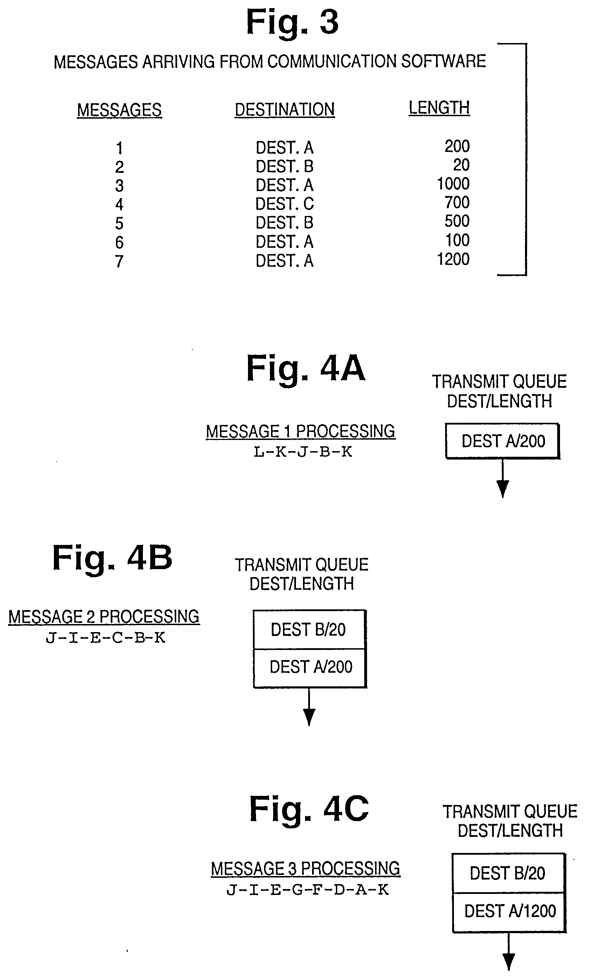

Figs. 2 and 3 show an example of seven data digital messages which are intended for transmission to various destinations. Referring to Fig. 3, the first message is destined for destination A and has a length of 200 bytes. Referring to Fig. 2, the outbound queue is diagramed on the left hand side and the 200 byte message for destination A is shown as the first queue. The second message for destination B has a 20 byte length; the third message for destination A has a 1,000 byte length; the fourth message for destination C has a 700 byte length; the fifth message for destination B has a 500 byte length; the sixth message for destination A has a 100 byte length; and the seventh message for destination A has a 1,200 byte length. Each of these message packets are shown as discrete packets on the left hand side of Fig. 2.

In the typical air time example given above, in which the air time equals one plus the number of bytes divided by 606, the air time for transmitting the seven packets illustrated on the left hand side of Fig. 2 would be 12.64 seconds. Further, where there are seven packets, there would be a one second spacing between each of the seven packets so that inbound message could get through. This would result in another six second interval, requiring the total time to send all of the seven packets to be 18.64 seconds.

However, the system of the present invention reduces the transmission time period substantially by concatenating digital data messages destined for the same destination.

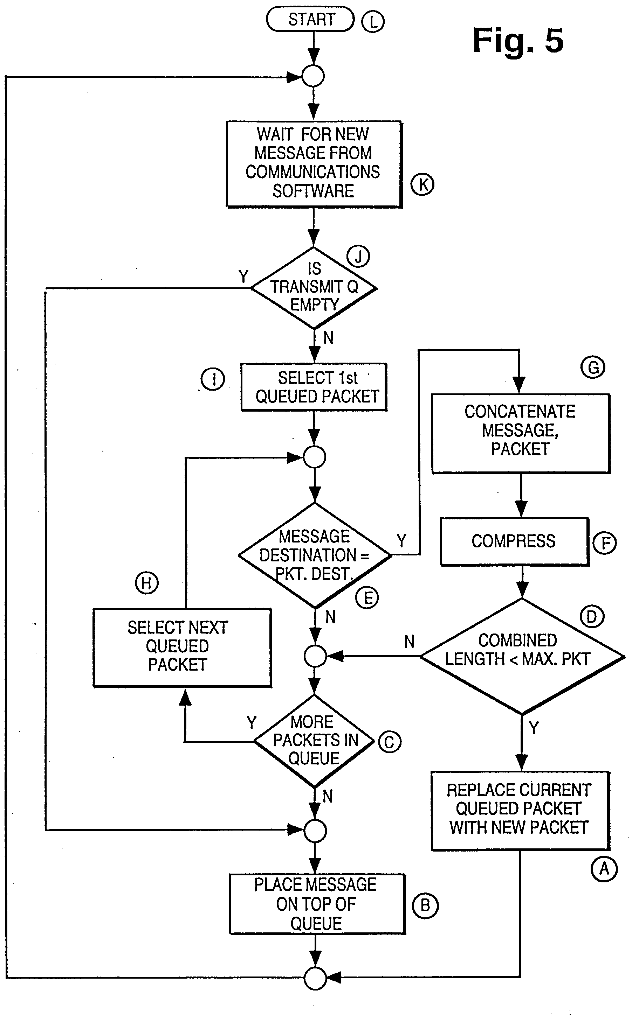

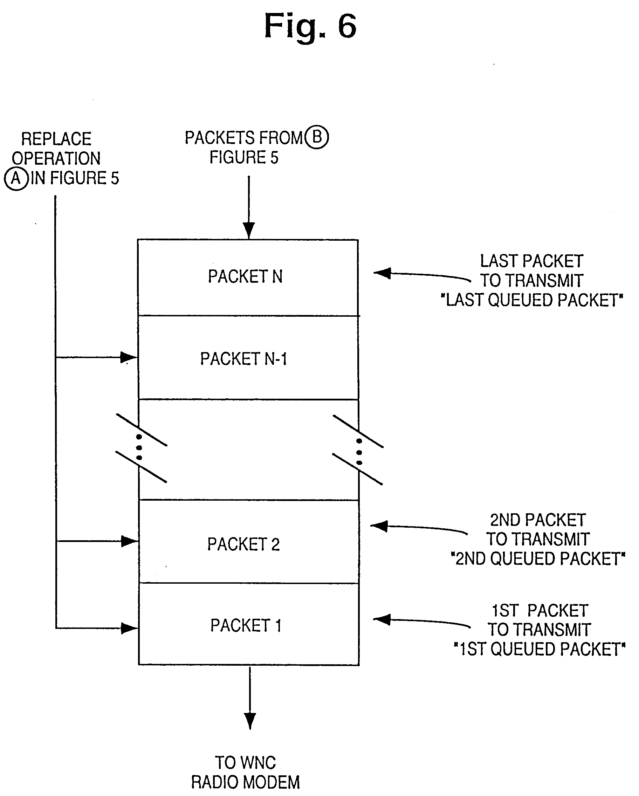

Referring to Fig. 5 which is a flow diagram of the system of the present invention, after starting (L) the system waits for a new message from the communication's software (K). When the message is received a determination is made whether the transmit queue is empty (J). If the transmit queue is empty, the message is placed on top of the queue (B). If the transmit queue is not empty, the first queued packet is selected (I) and a determination is made whether the message destination is the same as a previous packet destination (E). If the message destination is the same as a previous packet destination, the new message is concatenated with that packet (G), compressed if desired (F), and then a determination is made whether the combined length of the new packet is less than the maximum packet length (D). If the combined length of the new packet is less than the packet length, then the current queued packet is replaced with the new packet (A).

If the message destination is not the same as the previous packet destination, a determination is made whether there are more packets in the queue (C). If there are no more packets in the queue, the message is placed on top of the queue (B). If there are more packets in the queue, however, the next queued packet is selected (H) and a determination is made whether the message destination is the same as the previous packet destination (E).

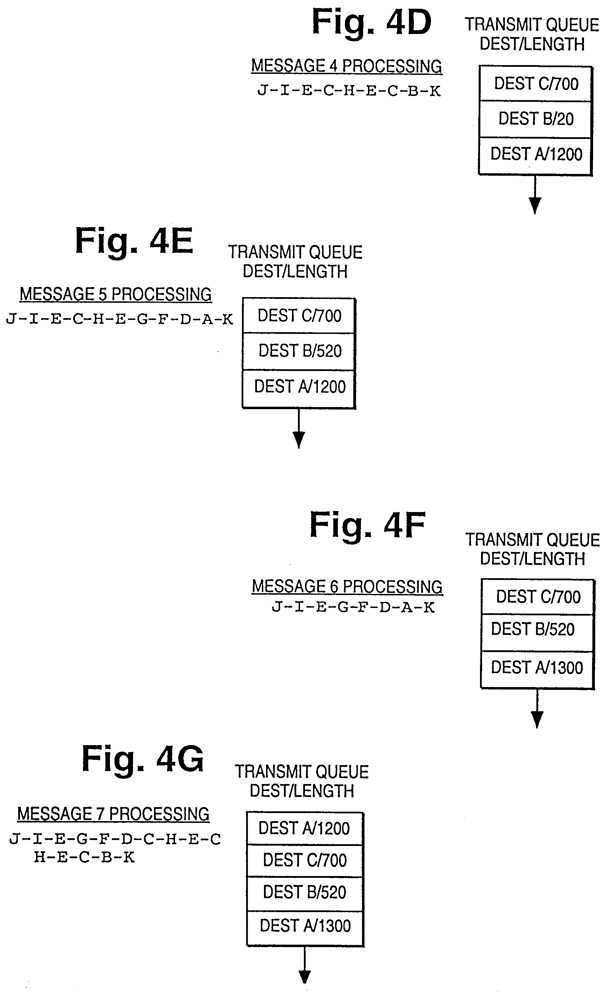

The processing of the seven messages of Fig. 3 can be readily understood by referring to Figs. 4A through 4G and Fig. 5. The letters in Figs. 4A through 4G correspond to the letters associated with the blocks of Fig. 5. In the following example using seven messages, the maximum packet length is 1500 bytes and there will be no compression.

Thus with respect to the first message having a 200 byte length and going to destination A, the system starts (L), then the message is received from the communication software (K). A determination is made whether the transmit queue is empty (J). The transmit queue is empty and the message is placed on top of the queue (B) and the system waits for the next message (K). The transmit queue showing the first message going to destination A having a 200 byte length is illustrated on the right hand side of Fig. 4A.

The second message two having a 20 byte length and going to destination B is now processed. Since the transmit queue is no longer empty (J) the first queued packet is selected (I). A determination is made whether the second message destination is the same as the first packet destination (E). Since it is not the same, a determination is made whether there are more packets in the queue (C) and since there are no more packets in the queue, the second message is now placed on top of the queue (B) and the system waits for the next message (K). The transmit queue showing the first message and the second message is illustrated on the right hand side of Fig. 4B.

The third message is to destination A and comprises 1,000 bytes. Referring to Figure 4C, a determination is made whether the transmit queue is empty (J). Since it is not empty, the first queued packet is selected (I) and a determination is made whether the third message is going to the same destination as a previous destination (E). Since the destination of the third message is the same as the destination of the first message, both messages are concatenated (G) and a determination is made whether the combined length of the new packet is less than the maximum packet length. Since the combined length is less than the maximum packet length, the current queued packet is replaced with a new packet (A) (see Fig. 6) and the system waits for the next message. The resulting transmit queue is illustrated on the right hand side of Fig. 4C.

The operation of Block B of Fig. 5, placing the message on top of the queue, is illustrated in Fig. 6. It is seen that the first packet for transmission is shown at the bottom of Fig. 6, the second packet is above the first packet, etc. Block A of Fig. 5 comprises a replace operation which is also illustrated in Fig. 6.

Message four comprises 700 bytes and is destined to destination C. Since transmit queue is not empty (J) the first queued packet is selected (I) and a determination is made whether the message destination of the fourth message is the same destination as a previous destination (E).

Since it is not the same destination, a determination is made whether there are more packets in the queue (C). Since there are more packets in the queue, the next queued packet is selected (H) and a determination is made wether the destination of the next queued packet is the same as the previous packet destination (E). Since the message destination is not the same as the previous packet, a determination is made whether there are more packets in the queue (C). Since there are no more packets in the queue, the message is placed on top of the queue (B) and the system waits for the new message. The transmit queue, now comprising three packets, is illustrated on the right hand side of Fig. 4D.

From the foregoing description it is believed that the processing of the fifth, sixth and seventh messages can be readily understood with reference to Figs. 4E through 4G and Fig. 5. With respect to the seventh message, it is seen that the number of bytes for transmission to destination A exceeds the maximum packet length of 1,500 bytes and thus a new 1,200 byte packet destined for destination A is formed.

The four packets resulting from the concatenation of the seven messages is also illustrated in the central block of Fig. 2. Since there are only four packets for transmission instead of seven packets, the air time is reduced three seconds to 9.64 seconds from 12.64 seconds. Further, there are only three spacings between packets instead of six spacings, so the transmit time is reduced another three seconds. This results in a total time reduction for transmission from 18.64 seconds (for the seven packets shown on the left hand side of Fig. 2) to 12.64 seconds (for the four packets shown in the center of Fig. 2).

In order to reduce the air time further, the bytes may be compressed. For example, if the message contains 500 of the letter A, instead of sending the letter A 500 times an indication of the number 500 times an A could be provided via digital coding and then encoding when received. Thus on the right hand side of Fig. 2, the first packet to destination A is compressed from 1,300 bytes to 1,000 bytes; the second packet to destination B is compressed from 520 bytes to 400 bytes; the third packet to destination C is compressed from 700 bytes to 600 bytes; and the fourth packet to destination A is compressed from 1,200 bytes to 940 bytes. By such compression, the 3,720 bytes is reduced to 2,940 bytes. Dividing 2,940 bytes by 606 and adding four seconds corresponding to the overhead time for the four packets results in an air time of 8.85 seconds. Including the one second spacing between each packet for inbound messages, the total transmission time is 11.85 seconds after compression, as compared with 12.64 seconds after concatenation, and as compared with 18.64 seconds without concatenation or compression.

Although an illustrative embodiment of the invention has been shown and described, it is to be understood that various modifications and substitutions may be made by those skilled in the art without departing from the novel spirit and scope of the present invention.

## Claims

1. A data transmission system for transmitting a plurality of data messages to a plurality of destinations, comprising the steps of:
receiving a plurality of messages destined for a plurality of destinations;
when a message is received, determining its destination;
concatenating the messages destined for the same destination into respective destination packets;
queuing the respective destination packets; and
transmitting the queued packets periodically.

2. A system as defined by Claim 1, including the step of forming an additional destination packet if the length of messages for concatenation into a destination packet exceeds a predetermined length.

3. A system as defined by Claim 1, including the step of compressing concatenated messages in a packet.

4. A system as defined by Claim 3, in which said messages comprise digital data and the step of compressing comprises reducing the number of bytes by coding duplicative data.

5. A data transmission system for transmitting a plurality of data messages to a plurality of destinations, comprising the steps of:
receiving a plurality of messages destined for a plurality of destinations;
when a message is received, determining its destination;
if the destination of the received message is the same as the destination of a previously received message, then concatenating the message with said previously received message into a destination packet and storing the destination packet;
if the destination of the received message is not the same as the destination of a previously received message, then providing a new destination packet and storing the destination packet; and
transmitting the destination packets.

6. A data transmission system as defined by Claim 5, including the step of forming an additional destination packet if the length of the messages for storage in a destination packet exceeds a predetermined length.

7. A data transmission system for transmitting a plurality of digital data messages to a plurality of destinations, which comprises the steps of:
receiving a plurality of messages destined for a plurality of destinations;
when a message is received, determining its destination;
if the destination of the received message is the same as the destination of a previously received message, then concatenating the message with said previously received message into a destination packet;
compressing concatenated messages in a packet;
storing destination packets;
if the destination of the received message is not the same as the destination of a previously received message, then providing a new destination packet; and
transmitting each stored packet periodically via radio.

8. A data transmission system for transmitting a plurality of data messages to a plurality of destinations, comprising the steps of:
receiving a first message destined for a first destination;
storing said first message for transmittal in a first destination packet;
receiving a second message;
determining if there is a stored message;
if there is a stored message, determining if the second message is destined for said first destination;
if the second message is destined for the first destination, then concatenating the second message and the first message into a first destination packet and storing the first destination packet;
if the second message is not destined for the first destination, then storing the second message for transmission in a second destination packet;
receiving a third message;
determining if the third message is destined for the first destination or the second destination;
if the third message is destined for the second destination or the third destination, then concatenating the third message with the respective destination packet for which the third message is destined;
if the third message is not destined for the first destination, or the second destination then storing the third message for transmittal in a third destination packet.

9. A system as defined by Claim 8, including the step of forming an additional destination packet if the length of the messages for storage in a destination packet exceeds a predetermined length.

10. A system as defined by Claim 8, including the step of compressing concatenated messages in a packet.
